(19) Europäisches Patentamt

European Patent Office

Office européen des brevets

(11) **EP 1 158 146 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.⁷: **F02D 41/14**, F02D 41/22, F01N 11/00

(21) Anmeldenummer: **01111756.1**

(22) Anmeldetag: **15.05.2001**

(54) **Verfahren zum Betreiben einer Abgasreinigungsvorrichtung an einem Otto-Motor**

Method for operating an exhaust gas cleaning device in a spark-ignition engine

Procédé de fonctionnement d'un dispositif de purification des gaz d'échappement dans un moteur à allumage commandé

(84) Benannte Vertragsstaaten:
**AT BE CH CY DE DK ES FI FR GB GR IE IT LI LU MC NL PT SE TR**

(30) Priorität: **20.05.2000 DE 10025034**

(43) Veröffentlichungstag der Anmeldung:
**28.11.2001 Patentblatt 2001/48**

(73) Patentinhaber: **Umicore AG & Co. KG 63457 Hanau-Wolfgang (DE)**

(72) Erfinder:
• **Mussmann, Lothar, Dr. 63067 Offenbach (DE)**
• **Lindner, Dieter, Dr. 63457 Hanau (DE)**

• **Votsmeier, Martin, Dr. 63477 Maintal (DE)**
• **Richter, Jörg-Michael 60318 Frankfurt am Main (DE)**
• **Lox, Egbert, Dr. 63403 Hanau (DE)**

(74) Vertreter: **Stellbrink, Axel et al Vossius & Partner Siebertstrasse 4 81675 München (DE)**

(56) Entgegenhaltungen:
DE-A- 3 837 984          DE-A- 4 024 212
FR-A- 2 772 078          US-A- 4 817 384
US-A- 5 848 528

EP 1 158 146 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben einer Abgasreinigungsvorrichtung an einem Otto-Motor. Das Verfahren vermeidet insbesondere Fehlsteuerungen des Luft/Kraftstoff-Verhältnisses des Motors bei frischen Katalysatoren, welche Sauerstoff-Speicherkomponenten in hoher Konzentration enthalten.

Otto-Motoren werden im wesentlichen mit einem stöchiometrischen Luft/Krafstoff-Verhältnis betrieben. Bei Beschleunigung oder bei Volllast treten jedoch auch Betriebsphasen mit einem fetten Luft/Kraftstoff-Verhältnis auf. Zur Reinigung der Abgase eines solchen Motors werden sogenannte Dreiweg-Katalysatoren eingesetzt, die in der Lage sind, die drei wesentlichen Schadstoffe im Abgas, nämlich Kohlenwasserstoffen (HC), Kohlenmonoxid (CO) und Stickoxide (NOx) gleichzeitig in die unschädlichen Produkte Wasser, Stickstoff und Kohlendioxid zu überführen.

Voraussetzung für die gleichzeitige Umsetzung der drei Schadstoffe ist, dass das Abgas in etwa stöchiometrisch zusammengesetzt ist. Zu diesem Zweck wird vor dem Katalysator ein Sauerstoff-Sonde in den Abgasstrang des Motors eingefügt, mit deren Hilfe das Luft/Kraftstoff-Verhältnis des Motors geregelt wird. Diese Sonde wird auch häufig als Lambda-Sonde ($\lambda$-Sonde) bezeichnet.

Die Luftzahl Lambda ist das Verhältnis aus dem aktuellen Luft/Kraftstoff-Verhältnis und dem stöchiometrischen Luft/Kraftstoff-Verhältnis. Sie wird auch als normiertes Luft/Kraftstoff-Verhältnis bezeichnet. Ein stöchiometrisch zusammengesetztes Luft/Kraftstoff-Gemisch hat eine Luftzahl von $\lambda = 1$. Ein überstöchiometrisch zusammengesetztes Luft/Kraftstoff-Gemisch wird als mager bezeichnet und hat eine Luftzahl $\lambda > 1$, während ein unterstöchiometrisch zusammengesetztes, fettes Luft/Kraftstoff-Gemisch eine Luftzahl $\lambda < 1$ aufweist.

Moderne Dreiweg-Katalysatoren weisen einen hohen Gehalt an Sauerstoff speichernden Materialien auf, in der Regel Ceroxid oder Mischoxide auf der Basis von Ceroxid, die den Katalysatoren ein gutes dynamisches Verhalten verleihen, das heißt diese Katalysatoren sind in der Lage, alle drei Schadstoffe auch dann noch mit gutem Erfolg gleichzeitig umzusetzen, wenn das Luft/Kraftstoff-Verhältnis auf Grund der sich rasch ändernden Betriebsbedingungen des Motors sich vom idealen, stöchiometrischen Verhältnis in den fetten oder mageren Bereich entfernt.

Die katalytische Funktion eines Katalysators kann auf unterschiedliche Weise geschädigt werden. Neben der reversiblen oder permanenten Schädigung der Katalysatoren durch Katalysatorgifte können die Katalysatoren auch durch thermische Überlastung bei Temperaturen über 800° C permanent geschädigt werden. Durch hohe Abgastemperaturen kommt es zu einer Versinterung der katalytisch aktiven Komponenten sowie zu einer Abnahme der spezifischen Oberfläche der Materialien, aus denen die Katalysatoren bestehen. Betroffen sind dabei besonders auch die Sauerstoff speichernden Materialien, so dass mit zunehmender Alterung der Katalysatoren sich ihre katalytische Aktivität und insbesondere auch ihre dynamische Schadstoffumsetzung verschlechtert.

Für zukünftige Kraftfahrzeuge werden daher sogenannte On-Board-Diagnose-Systeme vorgeschrieben, die die Funktion des Abgasreinigungskatalysators ständig überwachen sollen, um Fehlfunktionen rechtzeitig erkennen zu können. Ein wesentlicher Punkt der Diagnose betrifft aus den genannten Gründen die Sauerstoff-Speicherfähigkeit des Katalysators. Zur Überprüfung der Sauerstoff-Speicherfähigkeit wird zusätzlich zur Lambda-Sonde vor dem Katalysator eine zweite Lambda-Sonde hinter dem Katalysator in den Abgasstrang des Motors eingefügt. Durch geeignete Auswertung der Signale beider Sonden kann gemäß der DE 41 28 823 eine Aussage über die Sauerstoff-Speicherfähigkeit des Katalysators gemacht werden.

Darüber hinaus wird die zweite Lambda-Sonde auch genutzt, um die korrekte Funktion der ersten Lambda-Sonde zu überprüfen und mögliche Änderungen der Sondenkennlinie infolge Alterung zu kompensieren. Die zweite Lambda-Sonde dient also als Master-Sonde zur Durchführung einer sogenannten Führungsregelung, um stets einen optimalen Schadstoffumsatz zu gewährleisten.

Es sind im wesentlichen zwei unterschiedliche Typen von Lambda-Sonden bekannt - sogenannte Lambda-Linearsonden und Lambda-Sprungsonden. Linearsonden liefern ein Sonden-Signal, das linear mit dem Sauerstoffgehalt des Abgases ansteigt. Eine Sprungsonde liefert dagegen eine Sondenspannung, die nur zwei Zustände kennt. Bei Über- oder Unterschreiten eines Schwellwertes der Sauerstoffkonzentration im Abgas springt die Sondenspannung von einem Zustand in den anderen. Unter mageren Bedingungen liegt die Sondenspannung unterhalb von etwa 200 mV. Unter fetten Bedingungen zeigt die Sonde eine Ausgangsspannung, die typischerweise zwischen 600 und 900 mV liegt. Die Sondenspannung besitzt einen steilen Gradienten im Übergangsbreich um Lambda = 1. Lambda-Linearsonden werden auch als UEGO (Universal Exhaust Gas Oxygen)-Sonden und Lambda-Sprungsonden als HEGO (Heated Exhaust Gas Oxygen)-Sonden bezeichnet. Die Funktionsweise dieser Lambda-Sonden werden im Kraftfahrttechnischen Taschenbuch von Bosch, VDI-Verlag, 20. Auflage von 1995, Seiten 490 bis 492, beschrieben.

Es wurde nun beobachtet, dass die Führungsregelung bei frischen Katalysatoren mit hohen Gehalten an Ceroxid zu einer Abmagerung des Luft/Kraftstoff-Gemisches während Beschleunigungsphasen führt. Damit verbunden sind starke Durchbrüche von Stickoxiden durch den Katalysator, so dass mit frischen Katalysatoren die Abgasnormen nicht erfüllt werden können. Erst bei gealterten Katalysatoren arbeitet die Führungsregelung erwartungsgemäß und erlaubt die Einhaltung der strengen Abgasnormen.

Es ist daher Aufgabe der vorliegenden Erfindung, ein Verfahren anzugeben, bei dem die Fehler der Führungsregelung bei frischen Katalysatoren sich nicht schädlich auswirken können oder vermieden werden.

Diese Aufgabe wird gelöst durch ein Verfahren zum Betreiben einer Abgasreinigungsvorrichtung an einem Otto-Motor, welcher überwiegend mit einem stöchiometrischen Luft/Kraftstoff-Verhältnis und bei Beschleunigung oder bei Volllast mit einem fetten Luft/Kranstoff-Verhältnis betrieben wird, wobei die Abgasreinigungsvorrichtung einen Dreiweg-Katalysator sowie eine erste Lambda-Sonde vor dem Katalysator und eine zweite Lambda-Sonde hinter dem Katalysator enthält und das Luft/Kraftstoff-Verhältnis unter Verwendung des Signals der ersten Lambda-Sonde geregelt wird und das Signal der zweiten Lambda-Sonde zur Kontrolle der ersten Lambda-Sonde (Führungsregelung) und zur Diagnose der Funktion des Katalysators dient. Das Verfahren ist dadurch gekennzeichnet, dass die Führungsregelung mit der zweiten Lambda-Sonde erst freigegeben wird, wenn bei fettem Abgas die Sondenspannung der zweiten Lambda-Sonde nicht um mehr als eine vorgegebene Spannungsdifferenz oberhalb einer Sollspannung liegt.

Während der Kalibrierungsphase für den jeweiligen Katalysatortyp wird die Sondenspannung hinter dem Katalysator in Abhängigkeit vom Betriebspunkt des Motors für jeweils optimale Schadstoffumsetzung ermittelt und als Sollwert für die Führungsregelung in der Motorsteuerung gespeichert. Bei frischen Katalysatoren wurde nun festgestellt, dass die Sonde hinter dem Katalysator fälschlicherweise viel zu hohe Spannungen liefert. Während zum Beispiel bei gealterten Katalysatoren für ein Luft/Kraftstoff-Gemisch mit $\lambda$ = 0,98 die Sondenspannung hinter dem Katalysator etwa 650 mV beträgt, kann sie bei frischen Katalysatoren bis auf 900 mV anwachsen. Die Führungsregelung versucht diesen zu hohen Wert auf den Sollwert von zum Beispiel 650 mV zu verringern und magert das dem Motor zugeführte Luft/Kraftstoff-Gemisch entsprechend ab - mit der schon beschriebenen Folge hoher Stickoxid-Durchbrüche durch den Katalysator.

Ohne den Anspruch einer wissenschaftlich exakten Erklärung zu erheben, wird angenommen, dass die Probleme der Führungsregelung bei frischen Katalysatoren eng mit der großen aktiven Oberfläche des in modernen Dreiweg-Katalysatoren enthaltenen Ceroxids zusammenhängen. Es ist bekannt, dass Ceroxid unter fetten Abgasbedingungen die Wassergas-Shift-Reaktion nach Reaktionsgleichung (1) katalysiert. Hierbei werden Kohlenmonoxid und Wasser in einer exothermen Reaktion zu Wasserstoff und Kohlendioxid umgesetzt:

$$CO + H_2O \leftrightarrows H_2 + CO_2 \qquad (1)$$

Es wird angenommen, dass diese Reaktion besonders effektiv an frischen Katalysatoren abläuft und somit zu einer vermehrten Wasserstoffproduktion führt. Tatsächlich konnte die vermehrte Wasserstoffproduktion an frischen Katalysatoren experimentell nachgewiesen werden. Oberhalb einer Katalysatortemperatur von 500° C wurden Konzentrationen von Wasserstoff im Abgas von bis zu 18000 ppm gemessen. Der Verlauf der Wasserstoff-Emission korreliert mit der zu hohen Sondenspannung der hinter dem Katalysator angeordneten Sonde.

Bei gealterten Katalysatoren ist die beobachtete Wasserstoff-Emission und die auf ihr beruhende Überspannung soweit vermindert, dass sie keinen schädlichen Einfluss auf die Führungsregelung mehr hat. Eine ausreichende Alterung liegt jedoch erst vor, wenn der Katalysator für eine gewisse Zeit mit Abgastemperaturen oberhalb von 800° C betrieben wurde. In der Regel wird der Katalysator nach einer Fahrstrecke des Kraftfahrzeugs von etwa 50 bis 100 km ausreichend gealtert sein.

Zur Vermeidung der Probleme mit der Führungsregelung bei frischen Katalysatoren kann die Führungsregelung während der ersten Betriebsstunden des Fahrzeugs ausgesetzt werden. Da aber die Alterung der Katalysatoren wegen der unterschiedlichen Betriebsweise der mit den Katalysatoren ausgerüsteten Kraftfahrzeuge nicht vorhersagbar ist, wird vorgeschlagen, die Führungsregelung erst dann zu aktivieren, wenn bei Beschleunigung oder Volllast die Sondenspannung der zweiten Lambda-Sonde nicht um mehr als eine vorgegebene Spannungsdifferenz oberhalb einer Sollspannung liegt.

Als Sollspannung hat sich ein Wert von 650 mV bewährt. Dieser Wert kann jedoch je nach Sondentyp auf einen anderen Wert gelegt werden. Für die Spannungsdifferenz, unterhalb derer die Führungsregelung aktiviert wird, hat sich ein Wert zwischen 30 und 60 mV bewährt, das heißt die Führungsregelung wird erst dann aktiviert, wenn bei Beschleunigungsphasen des Motors mit fettem Abgas die Sondenspannung hinter dem Katalysator auf einen Wert zwischen 680 und 710 mV gefallen ist.

In einer bevorzugten Ausführungsform des Verfahrens kann die Führungsregelung auch bei frischen Katalysatoren aktiv bleiben. In dieser Ausführungsform des erfindungsgemäßen Verfahrens wird die Wassergas-Shift-Reaktion durch Oxidation des Kohlenmonoxids zu Kohlendioxid unterdrückt. Zu diesem Zweck wird während Beschleunigung oder Volllast das benötigte fette Luft/Kraftstoff-Verhältnis nur als Mittelwert eines mit 0,5 bis 5 Hz modulierten Luft/Kraftstoff-Verhältnisses eingestellt, wobei die Amplitude der Modulation so bemessen wird, dass das Luft/Kraftstoff-Verhältnis zwischen mageren und fetten Werten hin- und herschwingt. Die Produktion von Wasserstoff während Betriebsphasen mit fetten Abgaszusammensetzungen wird also durch Überlagerung mit hochfrequenten Magerphasen wirksam unterdrückt.

**Patentansprüche**

1. Verfahren zum Betreiben einer Abgasreinigungsvorrichtung an einem Otto-Motor, welcher überwiegend mit einem stöchiometrischen Luft/Kraftstoff Verhältnis und bei Beschleunigung oder bei Volllast mit einem fetten Luft/Kraftstoff- Verhältnis betrieben wird, wobei die Abgasreinigungsvorrichtung einen Dreiweg-Katalysator sowie eine erste Lambda-Sonde vor dem Katalysator und eine zweite Lambda-Sonde hinter dem Katalysator enthält und das Luft/Kraftstoff-Verhätnis unter Verwendung des Signals der ersten Lambda-Sonde geregelt wird und das Signal der zweiten Lambda-Sonde zur Kontrolle der ersten Lambda-Sonde (Führungsregelung) und zur Diagnose der Funktion des Katalysators dient,
   **dadurch gekennzeichnet,**
   **dass** die Führungsregelung mit der zweiten Lambda-Sonde erst freigegeben wird, wenn bei fettem Abgas die Sondenspannung der zweiten Lambda-Sonde nicht um mehr als eine vorgegebene Spannungsdifferenz oberhalb einer Sollspannung liegt.

2. Verfahren nach Anspruch 1,
   **dadurch gekennzeichnet,**
   **dass** die Spannungsdifferenz 30 bis 60 mV beträgt.

3. Verfahren nach Anspruch 1,
   **dadurch gekennzeichnet,**
   **dass** während Beschleunigung oder Volllast das benötigte fette Luft/Kraftstoff-Verhältnis nur als Mittelwert eines mit 0,5 bis 5 Hz modulierten Luft/Kraftstoff-Verhältnisses eingestellt wird, wobei die Amplitude der Modulation so bemessen wird, dass das Luft/Kraftstoff-Verhältnis zwischen mageren und fetten Werten hin- und herschwingt.

**Claims**

1. A process for operating an exhaust gas treatment device in a gasoline engine which is operated mainly with a stoichiometric air/fuel ratio and is operated with a rich-mix air/fuel ratio when accelerating or under full load, wherein the exhaust gas treatment device contains a three-way converter catalyst and a first lambda probe upstream of the catalyst and a second lambda probe downstream of the catalyst and the air/fuel ratio is controlled by using the signal from the first lambda probe and the signal from the second lambda probe is used to check the first lambda probe (trim control) and to diagnose the function of the catalyst,
   **characterised in that**
   trim control with the second lambda probe is enabled only when, in the event of rich exhaust gas, the voltage difference between the probe voltage for the second lambda probe and a set point voltage is not larger than a predetermined value.

2. A process according to Claim 1,
   **characterised in that**
   the voltage difference is 30 to 60 mV.

3. A process according to Claim 1,
   **characterised in that**
   during acceleration or under full load, the rich air/fuel ratio required is set only as a mean value with an air/fuel ratio modulated at 0.5 to 5 Hz, wherein the amplitude of the modulation is such that the air/fuel ratio oscillates to and fro between lean and rich values.

**Revendications**

1. Procédé pour le fonctionnement d'un dispositif d'épuration des gaz d'échappement dans un moteur à essence fonctionnant principalement avec un rapport air/carburant stochiométrique et, en accélérations ou à pleine charge, avec un rapport air/carburant riche, le dispositif d'épuration des gaz d'échappement contenant un catalyseur trois voies ainsi qu'une première sonde lambda disposée devant le catalyseur et une seconde sonde lambda derrière le catalyseur, le rapport air/carburant étant régulé au moyen du signal émis par la première sonde lambda alors que le signal de la seconde sonde lambda sert à contrôler la première sonde lambda (régulation pilote) et à émettre un diagnostic sur le fonctionnement du catalyseur,
   **caractérisé en ce que**
   la régulation pilote avec la seconde sonde lambda n'est déclenchée que si, lorsque les gaz d'échappement sont riches, la tension de la seconde sonde lambda ne dépasse pas une différence de potentiel prédéfinie au-dessus d'une tension de consigne.

2. Procédé selon la revendication 1,
   **caractérisé en ce que**
   la différence de potentiel est de 30 à 60 mV.

3. Procédé selon la revendication 1,
   **caractérisé en ce que**
   pendant l'accélération ou la pleine charge, le rapport air/carburant riche nécessaire n'est réglé que sur une valeur moyenne d'un rapport air/carburant modulé de 0,5 à 5 Hz, l'amplitude de la modulation étant mesurée de telle sorte que le rapport air/carburant oscille par un mouvement de va-et-vient entre les valeurs pauvres et riches.